# EUROPEAN PATENT SPECIFICATION

(11) **EP 1 895 300 B1**
(45) Date of publication and mention of the grant of the patent: **19.05.2010**
(21) Application number: 07253374.8
(22) Date of filing: 28.08.2007
(51) Int. Cl.: B41M 3/00, B41M 1/12, G01N 33/487

(54) **Manufacture of biosensors by continuous web incorporating enzyme humidification**
Herstellung von Biosensoren mittels Endlosbahn mit Enzymbefeuchtung
Fabrication de bioacapteurs par humidification en continue d'enzymes incorporant le voile

(30) Priority: 29.08.2006 US 512552
(43) Date of publication of application: 05.03.2008
(73) Proprietor: Lifescan Scotland Ltd, Inverness, IV2 3ED, Scotland (GB)
(72) Inventor: Armstrong, Malcolm, Inverness Inverness-shire IV2 4WS (GB)
(74) Representative: Tunstall, Christopher Stephen

(56) References cited:
- WO-A-2004/039600

## Description

### BACKGROUND OF THE INVENTION

### 1. Field of the Invention

The present invention relates, in general, to a method of manufacturing test sensors for use in the measurement of an analyte or indicator e.g. glucose from a sample of body fluid e.g. blood, and more particularly to an improved web manufacturing process wherein a screen printing station is maintained at a predetermined level of humidity and temperature.

### 3. Problem to be Solved

Disposable electrochemical sensors for the measurement and monitoring of target analytes in blood or urine are well known. In particular, the determination of blood glucose concentrations within a sample of whole blood using disposable electrochemical sensors may be an everyday task for people with diabetes. Measurement kits that comprise a meter, a plurality of test sensors and a means for lancing the skin, permit routine measurements thereby providing diabetic patients with an increased ability to self-manage the condition.

Electrochemical sensors are generally formed as a series of layers supported on a substrate material. Mass production of sensors has been enabled by the introduction of screen-printing and other deposition techniques, with the multiple layers that make up each sensor being deposited in a batch process. Batch production can, however, be inefficient and can introduce opportunities for process variation including delays, variable storage conditions and also registration drift between different printing stations. Process variations can result in poor quality test sensors and problems with calibration of the batch, resulting in potentially erroneous readings when the sensors are used.

A characteristic inherent with screen-printing is the variation in the thickness of deposited layers. Standard screen-printing can be used to deposit layers from 1 to 100µm in thickness. Such thicker dimensions may be beneficial for the electrode layer of an electrochemical sensor, as the thicker print has greater conductivity, however this is not the case for reagent layers. The reagent layer typically comprises one or more layers of enzyme, the precise printing of which is essential as the amount of signal generated by a device of this type depends on the reaction of the enzyme with the target analyte within this predefined area. Variations in enzyme printing can affect the measurement signal and cause problems with reliability of results obtained. Reliable operation of the measurement device is somewhat dependent upon accurate printing of the reagent layer.

Further development of a mass manufacturing method utilizing a continuous web of substrate material that is transported past a number of separate printing stations for deposition of the layers making up a test sensor, virtually eliminated sources of variability described, and provided a controlled production process.

In a web manufacturing process for electrochemical sensors, a web of substrate material is passed through a series of print stations. At each print station, a new layer of material, such as electrode material for example, is deposited on the bare substrate or on top of a previously deposited layer using a screen printing process for example. In the screen printing process, the web of substrate material (which will now simply be termed 'web' hereonin) is positioned under a screen and an ink, for example a conductive ink to make the electrodes is pushed through selected portions of the screen to print a layer according to a predetermined layout on the portion of the web positioned below the screen. Thus, it is possible to build the electrochemical sensor on the substrate by moving the substrate from one print station to the next, printing each layer consecutively and cutting the individual sensors out of the finished web.

Enzyme inks used in the manufacture of electrochemical test sensors for the measurement of blood glucose for example, may be approximately 60% water. The water content of the enzyme ink helps to ensure that the viscosity remains the same throughout a print run; hence a consistent thickness of enzyme is laid down. If the water content of the enzyme changes during the printing process then variations in the print may occur. Loss of moisture could lead to the enzyme ink drying into the screen mesh thereby resulting in poor definition of the print and a reduction in the amount of ink printed. If the screen becomes clogged, the manufacturing process has to be stopped to allow maintenance. Frequently stopping a high speed, mass production process is costly and can lead to a loss of large quantities of material or product.

Therefore there exists a need for an improved process in the manufacture of electrochemical sensors for measurement of markers in the body, such as blood or interstitial fluid (e.g. glucose, fructosamine, haematocrit), where the water content of the printing materials remains essentially constant throughout the print run.

Patent application WO01/73109A2, filed on 28 March 2001 describes a Continuous Process for Manufacture of Disposable Electro-chemical Sensors. Patent application WO04/039600A2, filed on 30 October 2003 describes Enzyme Print Humidification in a Continuous Process for Manufacture of Electrochemical Sensors.

### SUMMARY OF THE INVENTION

A method of improving print quality in a web manufacturing process wherein said web manufacturing process includes at least one print station adapted to print enzyme ink on a moving substrate, said web manufacturing process comprising the steps of continuously moving said substrate through said web process; depositing enzyme ink onto the substrate material through a screen printing process wherein ink is deposited on a top side of a screen and forced through the screen onto the substrate located adjacent to the bottom side of said screen during the printing process; enclosing the entire enzyme print area environment; and providing a laminar air flow in contact with the enzyme print screen which maintains the moisture content of the enzyme ink. Air is passed at a predefined temperature and humidity through a diffuser plate prior to the air entering the enclosed enzyme print area, said air in said laminar flow has a temperature of between 16 and 20 degrees centigrade and a relative humidity of between 85 and 95%, and said air in said laminar flow has a relative humidity of approximately 91 %. Also, said diffuser plate comprises a micropore diffuser plate.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:
Figure 1 is a simplified flow diagram depicting the general layout of a web printing process;
Figure 2 is a schematic view showing a state of the art method of humidifying an enzyme print station of the web process of Figure 1;
Figure 3 is a plan view seen from underneath the enzyme print station of Figures 1 and 2, showing the air flow created by means of a perforated pipe;
Figure 4 is an enzyme print station for use with the web printing process of Figure 1, according to the present invention;
Figure 5 is a schematic diagram of the enzyme print station of Figure 4 showing the humidifying air flow according to the present invention;
Figure 6 is a front plan view of the enzyme print station of Figure 4;
Figure 7 is a side plan view of the enzyme print station of Figures 4 and 6 showing a hood in the upright position;
Figure 8 is a close-up perspective view of the enzyme print area of Figures 4 to 7 with the hood removed, showing a plenum box and location of a micro-pore diffuser plate according to the present invention;
Figure 9 is a perspective view of the hood area of the enzyme print station of Figures 4 to 8 showing a plenum box, diffuser plate and connection point for the environmental control system;
Figure 9A is a perspective view of the hood area of Figure 9 with the hood removed to more clearly show a plenum box and a micro-pore diffuser plate;
Figure 9B is a perspective view of the hood area of Figures 9 and 9A with the hood and plenum box removed to more clearly show a humidified air inlet and a micro-pore diffuser plate;
Figure 10 is a close up perspective view of a camera area for use with the enzyme print station of Figures 4 to 8, according to the present invention;
Figure 11 is a perspective view of a micro-pore plate for use with the apparatus of Figures 4 to 9 according to the present invention;
Figure 12 is a schematic diagram showing cascading air pressure within the apparatus of Figures 4 to 8 according to the present invention;
Figure 13 is a close-up front plan schematic view showing a laminar airflow environment within the enzyme print area of Figures 4 to 8, and 12.

### DETAILED DESCRIPTION OF ILLUSTRATIVE EMBODIMENTS OF THE INVENTION

While preferred embodiments of the present invention have been shown and described herein, it will be obvious to those skilled in the art that such embodiments are provided by way of example only. Numerous variations, changes, and substitutions will now occur to those skilled in the art without departing from the invention.

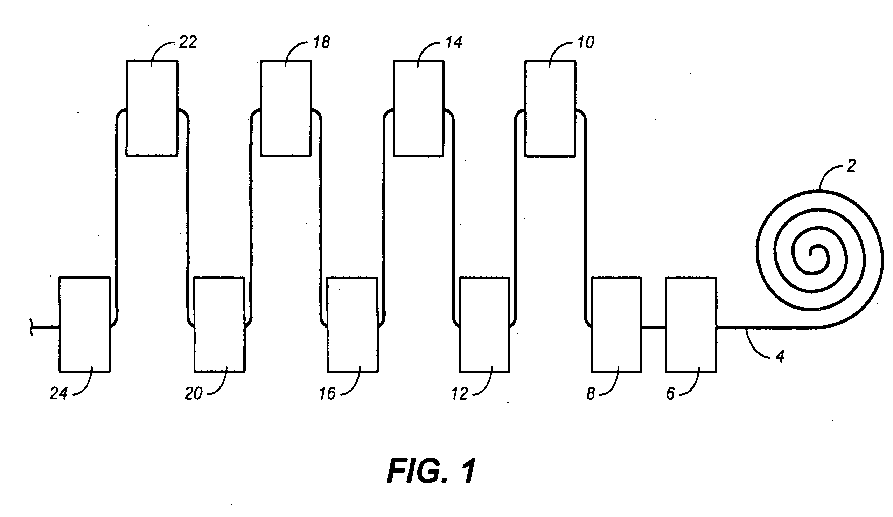

**Figure 1** shows a simplified flow diagram depicting the general layout of a web printing process known in the art for the manufacture of electrochemical test sensors, including an unwinder unit 2, a substrate 4, a preconditioning station 6, an electrode print station 8, a first dryer 10, an insulation print station 12, a second dryer 14, a first enzyme print station 16, a third dryer 18, a second enzyme print station 20, a fourth dryer 22 and a rewinder roller 24. It will be apparent to a person skilled in the art that while the following description relates to a process and apparatus concerning the number of stations outlined, the number of stations can however be any number and will depend on the number of layers required for the particular test sensor being manufactured.

A typical substrate material 4 suitable for use with the present invention may be a polyester material such as Melinex® ST328 (manufactured by DuPont Teijin Films). Substrate 4 may be supplied in a roll, and may be nominally 350 microns thick by 370mm wide and approximately 660m in length. These dimensions have been found to be suitable for the commercial production of electrochemical sensors by flat screen-printing on a web of substrate. Substrate 4 may include an acrylic coating on one or both sides to improve ink adhesion. Polyester substrate material 4 is suitably robust for printing and behaves satisfactorily at elevated temperatures and tensions, yet it is also manipulable through the apparatus of Figure 1. While polyester and indeed Melinex® are described in this embodiment, the use of other materials can be envisaged by those skilled in the art. Variations in dimensions and thickness will also be apparent to those skilled in the art.

Figure 1 shows a schematic view of an apparatus for practicing the present invention, of which patent application WO2004/039600A2 (filed October 30, 2003 by the same applicant) provides a detailed description and is fully incorporated herein. In one embodiment, substrate unwind unit 2 may be a Martin Unwinder/Automatic Splice, available from Martin Automatic Inc. in Rockford, IL. Preconditioning station 6, electrode print station 8, insulation print station 12, first enzyme print station 16 and second enzyme print station 20 may all be encompassed within a modified Kammann Printer, available from Werner Kammann Maschinefabrik Gmbh, model number K61, in Bunde, Germany. Rewinder unit 24 may be a Martin Rewinder for example, available from Martin Automatic Inc. in Rockford, IL. While specific models of apparatus are provided as examples, these may be varied and/or replaced and/or omitted altogether without departing from the scope of the invention as will be understood by those skilled in the art.

Preconditioning unit 6 may be used to precondition substrate material 4 at a sufficiently high temperature (up to 185 °C) so that in one example, irreversible stretch (approximately 0.7mm per artwork repeat) of the substrate is substantially removed, optionally whilst also under tension, prior to the substrate undergoing the printing process. Preconditioning the substrate material 4 improves stability and ensures that substrate 4 experiences minimum dimensional distortion during the web printing process. In one embodiment the web printing process may include an electrode layer (e.g. carbon, platinized carbon, gold, silver and mixtures of silver and silver chloride for example) laid down at station 8 in Figure 1, an insulation layer (e.g. polyester-based inks) laid down at station 12, and two enzyme layers laid down at print stations 16 and 20 in Figure 1. Selection of the constituents of the reagent layer(s) will depend on the target analyte of interest. For the detection of glucose for example, the reagent layer(s) will suitably contain an enzyme capable of oxidizing glucose (e.g. glucose oxidase) and a mediator compound e.g. potassium ferricyanide, to transfer electrons from the enzyme to the electrode resulting in a measurable current when glucose is present.

Between successive print stations, web substrate 4 is preferably transported through dryers 10, 14, 18 and 22 (for example a forced hot air or infra-red dryer) to dry each layer before proceeding to the deposition of the next layer. After final dryer 22, the printed web 4 is collected on a rewind roller 24 or may be introduced into a post-processing apparatus (not shown).

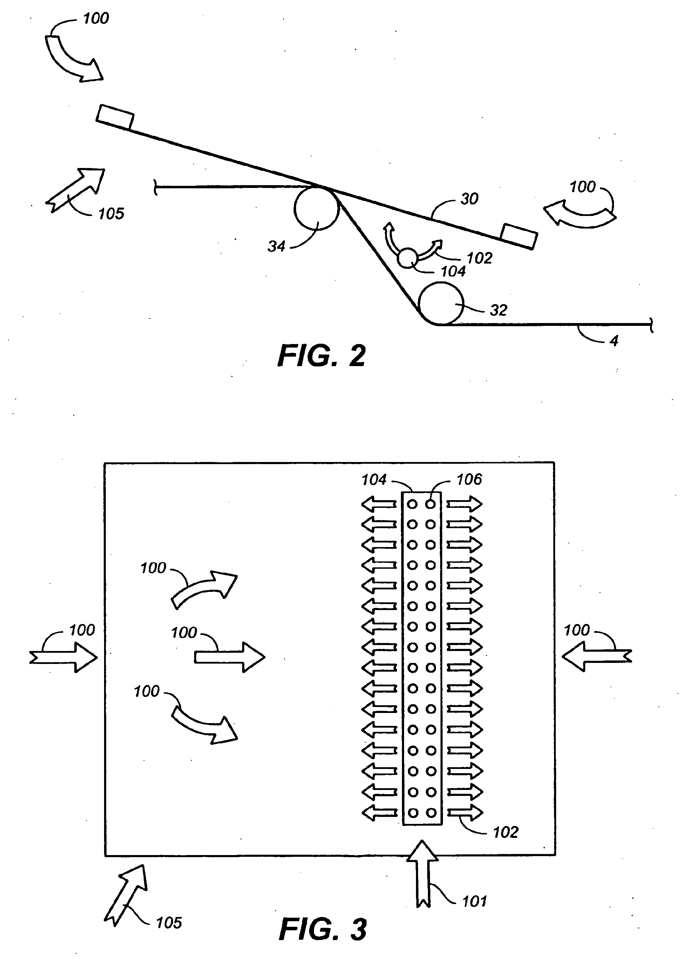

**Figure 2** is a schematic view showing the location of a humidifier located within the enzyme print station of a current web printing process known in the art, including top humid air 100, a screen 30, bottom humid air 105, a lower print roller 32, a pipe 104 comprising multiple perforations (item 106 in Figure 3) producing air jets 102, a substrate 4 and an upper print roller 34.

**Figure 3** is a plan view seen from underneath the enzyme print area of Figure 2, showing the humid environment created by means of a perforated pipe 104, including top humid air 100, bottom humid air 105, perforations 106, an air inlet 101 and multiple air jets 102.

Humidification and temperature specifications are set to ensure that the properties of the enzyme ink do not change by any significant extent over time during the flood and print cycle and preferably over the life of the entire print run. In particular it is desirable that the viscosity and water content of the enzyme ink do not change over time during the flood and print cycle and preferably over the life of the print run. If the water content of the enzyme ink changes during the printing process then variations in thickness of the layer laid down can occur. In addition, the enzyme ink may dry into the screen mesh causing poor print definition and a reduction in the amount of ink laid down. Precise print definition is important in the reliable performance of test strips, such as those used by diabetics to measure their blood glucose concentration.

Referring now to Figures 2 and 3, a state of the art method of enzyme station humidification in a continuous web printing process involves the use of a pipe 104 comprising numerous perforations 106 located underneath screen 30 just in advance of print roller 32. Moist air is delivered into pipe 104 via air inlet 101. As adjacent print roller 34 moves, pipe 104 moves with it in tandem, thereby humidifying the entire underside of screen 30 in an attempt to maintain the viscosity of the enzyme ink during the printing process.

In one embodiment, air at a relative humidity of approximately 91 % is projected onto the enzyme print screen 30 from underneath via perforated pipe 104 during the printing process. The enzyme print area is also humidified by top humid air 100 and bottom humid air 105, the directions of flow indicated in Figures 2 and 3. Given a velocity of approximately 120 litres per second of humid air traveling over the enzyme print screen, a 'swimming pool' effect can occur resulting in moisture being stripped from the enzyme ink. Reduced water content within the enzyme ink can cause the ink to build up on the screen, resulting in poor print definition and variability in the amount or thickness of ink laid down throughout the duration of a print run. To sustain the manufacturing process, the print run may have to be stopped frequently e.g. every 3 hours to clean the screens 30 and apply fresh enzyme ink. Stopping a mass scale manufacturing process is inefficient, costly and wasteful due to the time required cleaning or changing print screens and also replacing the enzyme ink supply. The present invention aims to eliminate some of the aforementioned problems.

The enzyme print area of Figures 2 and 3 may be concealed from the ambient room environment by a specifically designed hood that maintains humidity (approximately 85 to 95 percent relative humidity) and temperature (approximately 18 to 22 °C) in a controlled fashion relative to the conditions outside the hood, as shown and described in related patent application W02004/039600A2.

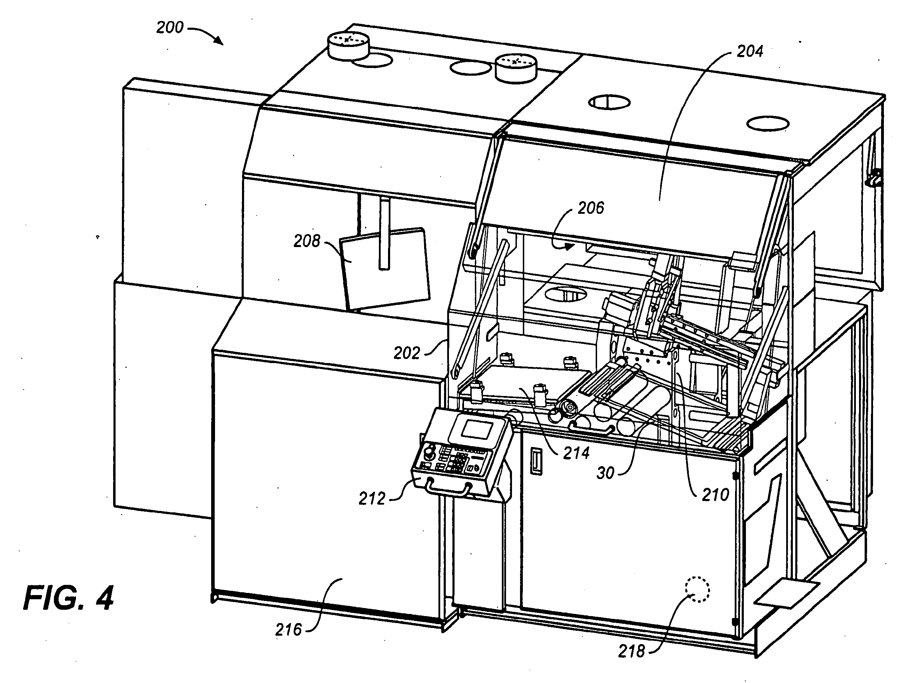

**Figure 4** is a perspective view of an enzyme print station 200 according to the present invention, including an enzyme print area 210, an enzyme screen 30, a monitor 208, a human-machine interface 212, a dryer bank 216, a camera mounting 214, a hood 202, a plenum box 204, a micro-pore diffuser plate 206 and a chilled roller 218.

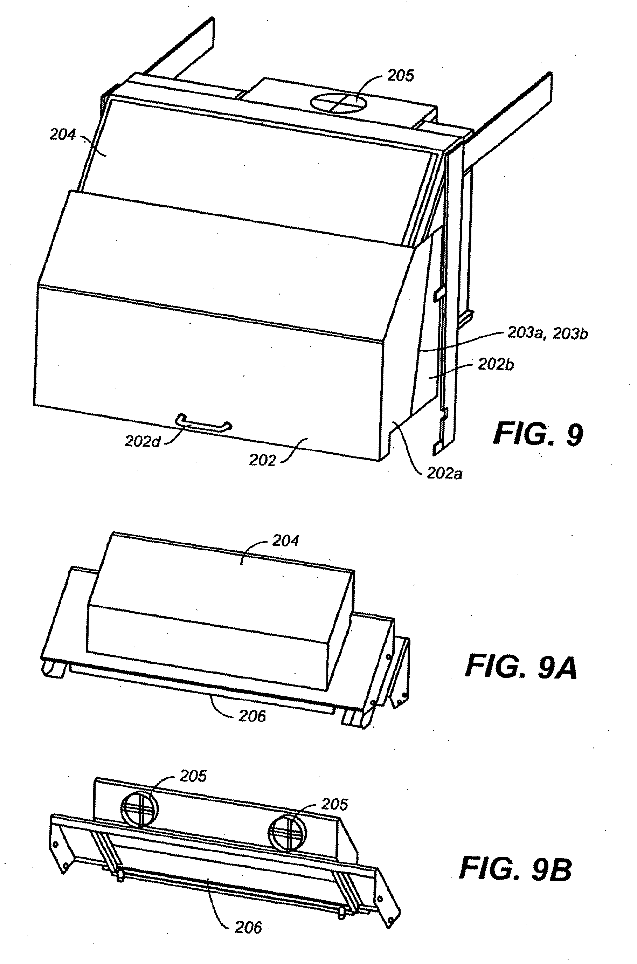

A continuous web printing process such as that described herein for the commercial production of electrochemical sensors may include one or more enzyme print stations such as items 16 and 20 in Figure 1. Figure 4 shows a perspective view of an enzyme print station 200 according to the present invention (corresponding to items 16, 20 of Figure 1) whereby the entire print area 210 is essentially contained within a covering hood 202 to maintain the required temperature and humidity environment therein. Hood 202 will be described in more detail in relation to Figure 9.

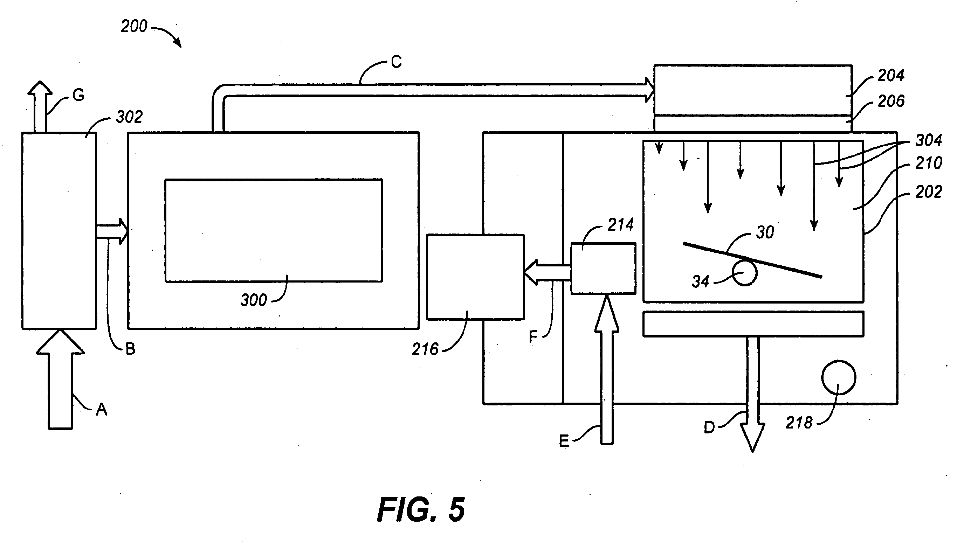

Humidified air arrives at enzyme print station 200 through plenum box 204 from a humidification system that will be described in relation to Figure 5. Air fed into plenum box 204 travels through a micro-pore diffuser plate 206 situated beneath plenum box 204 before it enters into enzyme print area 210 in a laminar fashion. Enzyme ink being printed onto screen 30 experiences an even, laminar flow of air at a predetermined humidity and temperature suitable for sustaining the printing procedure. A person trained to operate such a continuous web-printing machine would do so using human-machine interface 212 and view the print quality on monitor 208 from a camera mounted on camera mounting 214 within print area 210.

A humidification system according to the present invention provides laminar airflow around the entire enzyme print screen area 210. This will allow the enzyme ink screen life to extend considerably as the ambient air condition within the enzyme print area 210 is essentially equal to the humidity of the humidified air entering via laminar air flow plenum box 204, thereby helping to maintain the equilibrium relative humidity of the enzyme ink at approximately 91%. In comparison to the method given in Figures 2 and 3, the humidification method of the present invention does not significantly strip the moisture content from the enzyme ink, thereby allowing the printing process to continue for many hours, approximately 20 hours, without having to stop the entire web process due to the enzyme ink drying into the screen mesh 30.

**Figure 5** is a schematic flow diagram of the apparatus of Figure 4, depicting enzyme print station 200 humidification according to the present invention, including a desiccant dryer 302, a mobile environmental control unit 300, a laminar air flow plenum box 204, a print station hood 202, a print screen 30, a print roller 34, a camera area 214 with dry air supply 'E', a dryer bank 216, arrows indicating laminar air flow 304 into the enzyme print area 210, an arrow 'A' indicating air flow from the ambient room into desiccant dryer 302, an arrow 'B' indicating desiccated air flow from dryer 302 to mobile environmental control unit 300, an arrow 'C' indicating air flow from mobile environmental control unit 300 to laminar air flow plenum box 204, an arrow 'D' indicating a humid air exhaust flow exiting enzyme print area 210, an arrow 'E' indicating dry air supply into camera area 214, an arrow 'F' indicating air flow from camera area 214 to dryer bank 216 and an arrow 'G' indicating a regeneration air exhaust.

Referring to Figures 4 and 5, approximately 208 litres per second of ambient clean-room air is drawn through an eu4 quality grade filter and enters into desiccant dryer 302 indicated by arrow 'A' in Figure 5. The air is stabilized within desiccant dryer 302 and dried to approximately 3 g/kg nominal with a corresponding rise in temperature to nominally 50°C before feeding into the mobile environmental control system (MECS) 300 indicated by arrow 'B'. Most of the air drawn in to desiccant dryer 302 is ducted into the environmental control unit 300 (~150 litres per second), and approximately 58 litres per second is regeneration air discharged to waste indicated by arrow G. The regeneration air may be in the range of 50 to 60 °C and be of high humidity.

Within MECS 300 the 150 litres per second airflow passes over a main cooling coil thereby lowering the air temperature from a nominal 50 °C to approximately 15 °C whilst maintaining a 3 g/kg moisture content. Subsequently, within MECS 300 the air may pass over an electric heater and/or steam injection pipes to provide the required temperature and moisture content combination. An increase in temperature may be associated with heat gain from the steam injection pipes, therefore the sensor that controls the electric heater may typically be located downstream from the humidifier. Heat gain from the humidifier and the electric heater may be combined and the appropriate control strategy implemented to maintain the correct supply temperature to the enzyme print station. Still within MECS 300, following on from the humidifier may be a trim-cooling coil designed as a sensible cooler to trim out any remaining excess heat from the electric heater and/or humidifier. The air then passes through a fan, the volume of flow being controlled by a velo tube differential pressure system mounted in the discharge duct of the fan that controls the flow at approximately 150 litres per second. Control of humidity is achieved by a combined humidity and temperature sensor (not shown) mounted in the supply duct, indicated by arrow 'C' in Figure 5. Mounting the control sensor in the supply duct allows for the effects of the fan to be compensated for by the trim-coil and the humidifier.

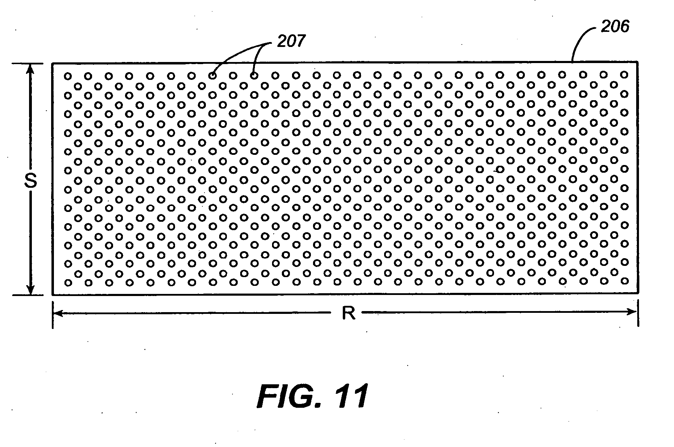

MECS 300 conditions air to within the range 85 to 95% relative humidity, and 16 to 20°C, and more specifically to approximately 91% relative humidity and 18°C. The pre-conditioned air is delivered to laminar air plenum box 204 indicated by arrow 'C', wherefrom the air is diffused through a micro-pore diffuser plate 206 and dispensed into the enzyme print screen area 210. Diffuser plate 206 shown in detail in Figure 11 consists of a flat, substantially rigid screen (for example made of Stainless Steel) that securely fits within the enzyme print area 210 at the location where the air supply enters into the environment contained by hood 202. Diffuser plate 206 includes a series of small holes (typically approximately 3mm in diameter) through which the airflow from plenum box 204 first passes before entering into enzyme print area 210. Diffuser plate 206 causes the airflow (at approximately 150 litres/second) to become laminar. Enzyme screen 30 is thereby humidified with a laminar airflow effect, allowing the enzyme ink screen life to extend considerably as the humidified air does not strip the moisture from the enzyme ink. The laminar flow of humidified air helps to maintain the equilibrium relative humidity of the enzyme ink at approximately 91 %. After passing through the enzyme print station the air is mostly extracted through loss to the room as indicated by arrow 'D'.

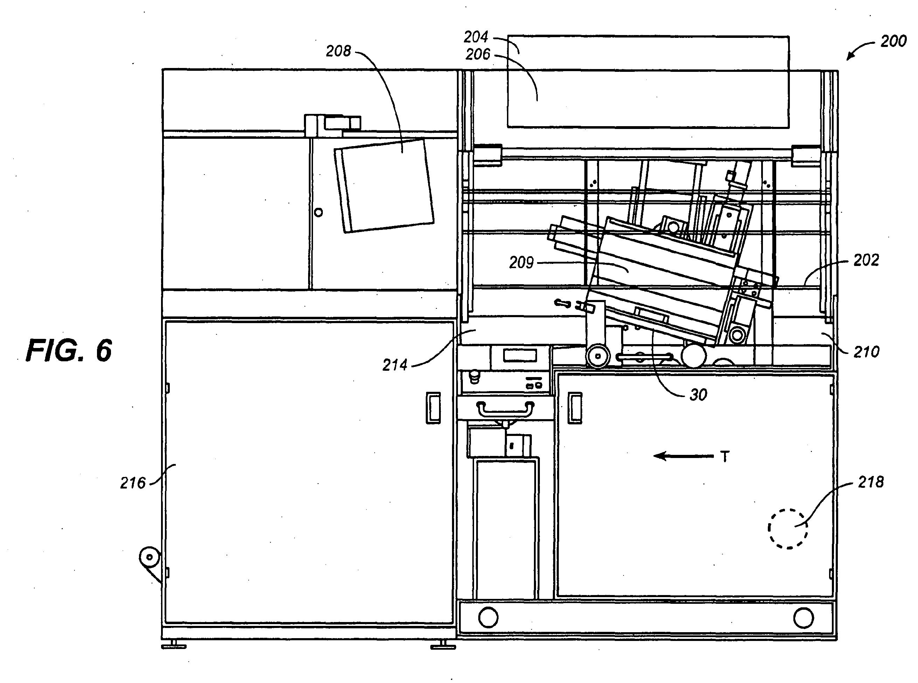

**Figure 6** is a front plan view of the enzyme print station 200 of Figure 4, including a plenum box 204, a micro-pore diffuser plate 206, a monitor 208, a camera area 214, a dryer bank 216, an enzyme print area 210, a hood 202, a screen 30, a chilled roller 218 a dryer bank 216 and an arrow 'T' indicating the direction of movement of substrate material 4.

The front plan view of enzyme print station 200 shows the relative locations of plenum box 204 and micro-pore diffuser plate 206, both located above enzyme print area 210 in this example embodiment. Enzyme print area 210 is enclosed within hood 202, and comprises a screen 30 located beneath printing apparatus 209, and a camera area 214 to one side of screen 30 in a position ready to view the printed substrate 4 as it moves away from printing apparatus 209 in a direction indicated by arrow 'T'. Hood 202 is shown in a closed position in Figure 6.

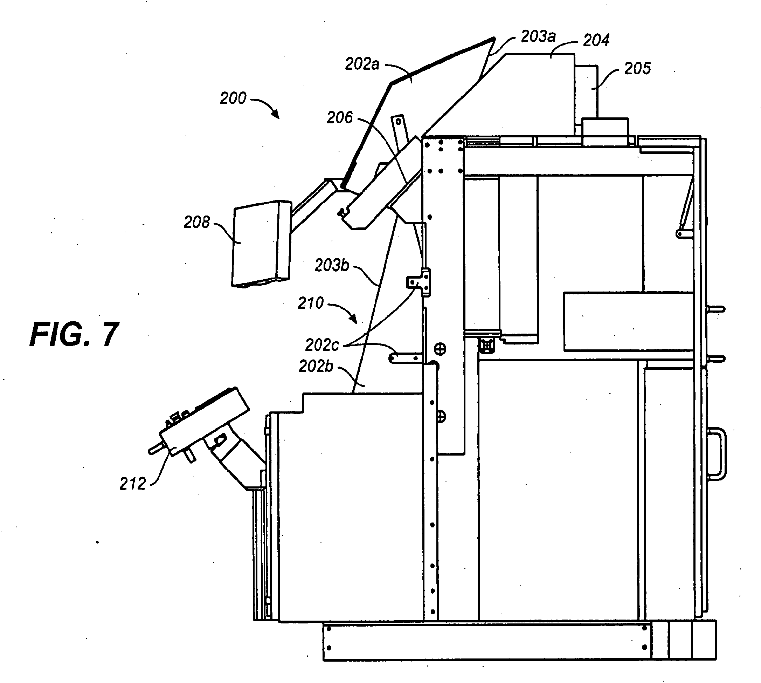

**Figure 7** is a side plan view of the enzyme print station 200 of Figures 4 to 6 showing hood 202 in the upright position, including a fixed portion 202b with engagement surface 203b, an opening portion 202a with engagement surface 203a, mountings 202c, a plenum box 204, a humidified air inlet 205, a micro-pore diffuser plate 206, a monitor 208, an enzyme print area 210 and a human-machine interface 212.

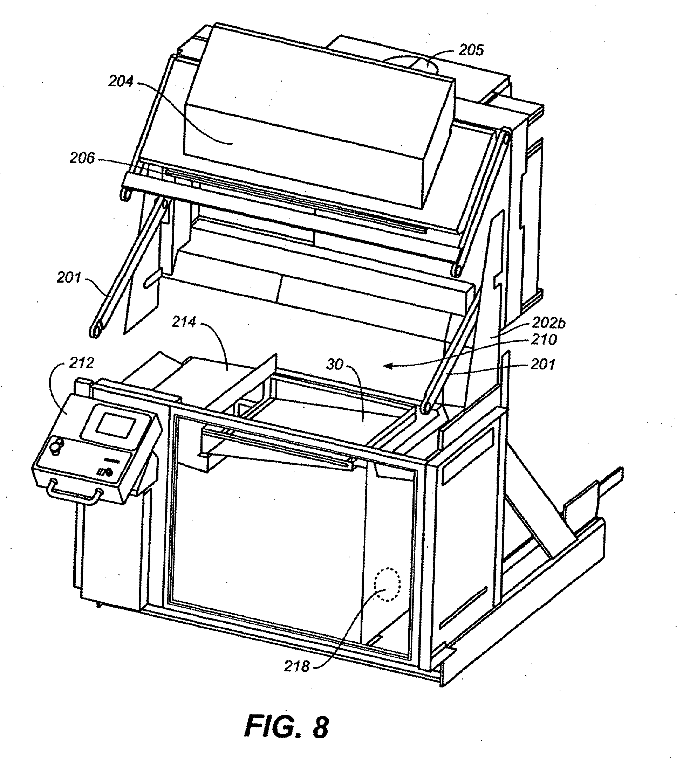

**Figure 8** is a close-up perspective view of the enzyme print station 200 of Figures 4 to 7 with opening portion 202a of hood 202 and printing apparatus 209 removed to more clearly show plenum box 204, a micro-pore diffuser plate 206, a humidified air inlet 205 delivering air from the environmental control system 300 (shown and described in relation to Figure 5), a camera area 214, an enzyme print area 210, a hood fixed portion 202b, hood arms 201, a human-machine interface 212 and a chilled roller 218.

Figure 7 shows two components comprising hood 202, namely an opening portion 202a and a fixed portion 202b. In this side plan view, opening portion 202a is shown in the open position, manually lifted above enzyme print area 210 and coming to rest close to plenum box 204. Fixed portion 202b is held securely in place by mountings 202c. During operation of the continuous web printing process, hood portions 202a and 202b engage at surfaces 203a and 203b respectively, forming an encapsulation in order to create the desired temperature and humidity environment within enzyme print area 210.

Humidified air inlet 205 can be seen in both Figures 7 and 8, through which air at a predetermined temperature and humidity enters into plenum box 204. Inlet 205 corresponds to arrow 'C' in Figure 5, transferring air from the mobile environmental control system 300 to enzyme print area 210. The air passes through micro-pore diffuser plate 206 before entering into enzyme print area 210 during operation.

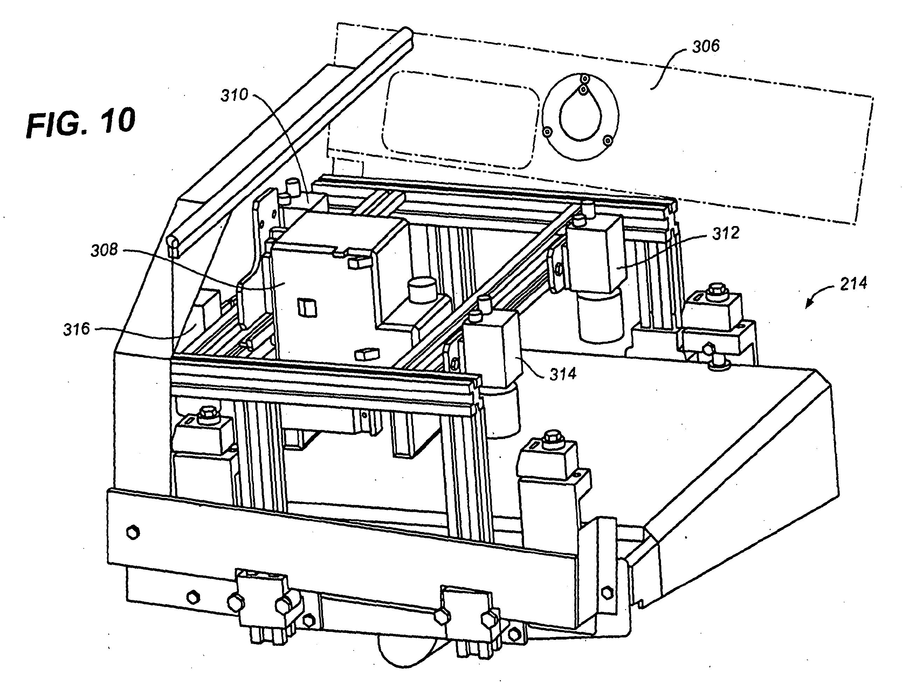

Figure 8 shows a clear view of camera area 214 that will be described in more detail in relation to Figure 10. A hood arm 201 is located at each side of enzyme print area 210, and would be fixed to hood opening portion 202a (not shown) to facilitate the opening and closing of opening portion 202a should an operator need access to screen 30 for example.

**Figure 9** is a perspective view of hood 202 of enzyme print station 200 of Figures 4 to 8 including a fixed portion 202b, an opening portion 202a, engagement surfaces 203a, 203b, a handle 202d, a plenum box 204, a micro-pore diffuser plate 206 and a humidified air inlet 205.

**Figure 9A** is a perspective view of the hood 202 area of Figure 9 with hood 202 removed to more clearly show plenum box 204 and micro-pore diffuser plate 206.

**Figure 9B** is a perspective view of the hood 202 area of Figures 9 and 9A with both hood 202 and plenum box 204 now removed to more clearly show humidified air inlet 205 and micro-pore diffuser plate 206.

Referring now to Figures 9, 9A and 9B, as discussed previously, hood 202 comprises an opening portion 202a and a fixed portion 202b that engage at surfaces 203a and 203b respectively forming an essentially air and moisture impermeable seal around the perimeter of hood 202 in the closed position. Hood 202 may be made of a clear, rigid material such as Perspex for example, and forms an encapsulation when in a closed position thereby creating a concealed environment within. Clear rigid material, such as Perspex for example, allows operators of the continuous web-printing machine to view the components of the printing machine during operation whilst also performing the function of shielding the operators from potentially dangerous moving parts.

Figure 9A shows plenum box 204 and micro-pore diffuser plate 206 separated from hood 202, and the location of humidified air inlet 205 can be seen at the reverse side of plenum box 204 in Figure 9B. Air treated by the mobile environment control system (MECS) 300 passes into plenum box 204 at inlets 205, and is subsequently forced through micro-pore diffuser plate 206 providing an even, laminar air flow into enzyme print area 210.

**Figure 10** is a close up perspective view of camera area 214 for use with the enzyme print station of Figures 4 to 8, according to the present invention including a dry air inlet 306 (corresponding to arrow 'E' in Figure 5), a registration camera 308, a first camera 310, a second camera 312, a third camera 314 and a fourth camera 316.

Registration camera 308 checks for alignment of registration markings or fiducials printed on the substrate material 4 passing through the continuous web manufacturing process, as described in related patent application WO2004/039600A2 filed 30 October 2003 by the same applicant. Registration camera 308 may effect an automatic adjustment upon the web of substrate to correct for any misalignment detected. Registration is an important factor in the manufacture of electrochemical test strips, in particular those that comprise a number of separate layers either screen printed or laid down by any other method. Correct registration of subsequent layers is necessary to ensure reliability in the performance of each individual test strip in the measurement of an analyte of interest.

Four additional cameras 310, 312, 314 and 316 monitor the four quadrants of each card of test strips as the web of substrate 4 passes through enzyme print station 200. Cameras 310, 312, 314 and 316 are linked to monitor 208 shown in Figures 4, 6 and 7 where the operators can view a snapshot of each card as it passes through camera area 214 providing a manual visual inspection system of print quality and registration.

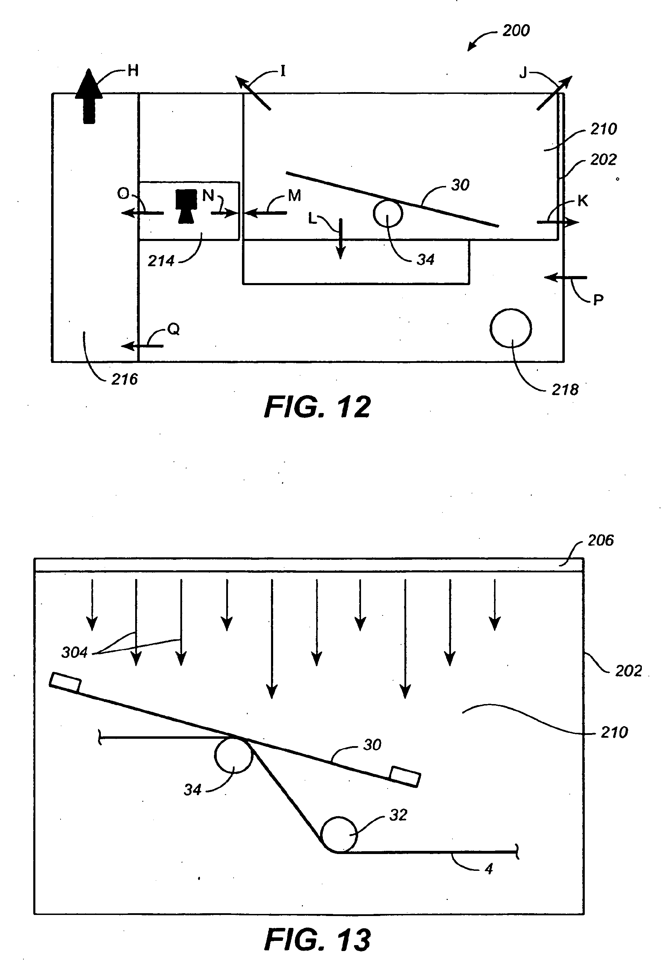

To prevent the lens of cameras 308, 310, 312, 314 and 316 from attracting condensation, camera area 214 is supplied with conditioned air less than 50% relative humidity, and is maintained at a positive air pressure compared to enzyme print area 210 as discussed in relation to Figure 12. Such conditions in camera area 214 allow the camera lenses to remain virtually moisture free, and able to provide a clear view of the printed substrate 4 as it passes through enzyme print station 200.

**Figure 11** is a perspective view of a micro-pore diffuser plate 206 for use with the apparatus of Figures 4 to 8 according to the present invention, including an approximate length R, an approximate width S, a surface area RS and a plurality of holes 207.

Enzyme print area 210 is maintained at a constant temperature and relative humidity by the flow of air through micro-pore plate 206 into the enzyme print area 210 contained within hood 202. Micro-pore plate 206 is made of an essentially rigid material such as Stainless Steel for example, available from Werner Kammann. The entire surface area RS of micro-pore plate 206 contains a plurality of small holes 207, approximately 3mm in diameter and providing a density of approximately 40,000 holes per square meter. Preconditioned air flowing from plenum box 204 into enzyme print area 210 first travels through holes 207 of micro-pore plate 206 to transform the flow of air from an essentially uncontrolled, high velocity flow into a controlled, laminar flow as will be described in more detail in relation to Figures 12 and 13. Without micro-pore diffuser plate 206, the flow of air may be uneven, and harsh against the relatively thin layer of enzyme ink printed onto substrate 4 as it passes through enzyme print station 200. An uncontrolled high velocity, hence uneven flow of air can strip moisture from the enzyme ink, resulting in poor print definition after a short period of time e.g. 3 hours, and the need to stop the entire web printing apparatus to clean screen 30 and replace the supply of enzyme ink. Provision of micro-pore diffuser plate 206 in enzyme print station 200 according to the present invention, transforms the air flow from an uncontrolled stream into an even, laminar flow over the entire print area 210, thereby virtually eliminating the problems discussed. Hood 202 ensures that the ambient conditions housed therein are desirable for sustaining the required moisture content of the enzyme ink, thereby maintaining print definition and resulting in fewer stoppages of the web printing apparatus due to drying out of the enzyme ink. Additional benefits are reduced waste of expensive inks and reduced downtime of the web printing apparatus.

Although specific micro-pore plate 206 dimensions are illustrated, it would be apparent to a person skilled in the art that many different plate dimensions are conceivable including pore size and density, and are intended to be included herein without departing from the nature of the present invention.

**Figure 12** is a schematic diagram of the enzyme print station 200 described in Figure 5 showing the cascading air pressure, including an enzyme print area 210, a hood 202, a chilled roller 218, a screen 30, a print roller 34, a camera area 214, a dryer bank 216, an arrow 'H' depicting a pressure difference between dryer bank 216, arrows 'I', 'J', 'K', 'L' and 'M' depicting a pressure difference over the boundary of enzyme print area 210, an arrow 'N' depicting a pressure difference between camera area 214 and enzyme print area 210, an arrow 'O' depicting a pressure difference between camera area 214 and dryer bank 216, an arrow 'P' depicting a dry air feed to chilled roller section 218 and an arrow 'Q' depicting a pressure difference between chilled roller section 218 and dryer bank 216.

The air pressure within the enzyme print station hood i.e. enzyme print area 210 is slightly higher than that of the room, depicted by arrows 'I', 'J' and 'K' in Figure 12, therefore a small amount of air is extracted from within hood 202 to the room area via humid air exhaust 'L' to balance the pressure. Camera area 214 has an equilibrated pressure compared to enzyme print area 210, and camera area 214 is supplied with conditioned air less than 50% RH, indicated by arrow 'E' in Figure 5, to prevent the web viewer cameras (items 310, 312, 314 and 316 in Figure 10) and registration camera 308 being affected by condensation from the humid air. Arrows 'M' and 'N' in Figure 12 reflects the equilibrium in air pressure across the boundary between camera area 214 and enzyme print area 210. Arrow 'H' indicates the large pressure difference between dryer bank area 216 and an area outwith the enclosed enzyme print station apparatus 200.

Dryer bank 216 runs at a slightly negative pressure compared to the room, and also draws some air from camera area 214 indicated by arrow 'O'. This helps to eliminate dry air from within camera area 214 from leaking into the enzyme print area 210 that may have the effect of drying the enzyme ink.

Air of less than 50% RH is supplied to chilled roller section 218, located below the enzyme print hood 202, at the same pressure as air within enzyme print hood 202; this prevents condensation forming on the surface of substrate material 4 which may re-wet the first enzyme print when a second layer of enzyme ink is printed on top at a subsequent enzyme printing station. Condensation on substrate 4 may cause the enzyme ink to offset onto a surface of contact roller 32 (as depicted in Figure 2) during the printing process.

**Figure 13** is a close-up schematic view depicting the laminar air flow within the enzyme print area 210 of Figures 4, 5 and 12, including a hood 202, an enzyme print area 210, a micro-pore plate 206, a laminar air flow depicted by arrows 304, a print screen 30, a substrate 4, a lower print roller 32 and an upper print roller 34.

As discussed previously, a high velocity, uneven flow of air across print screen 30 can cause moisture to be stripped from the enzyme ink, resulting in a wasteful process and also downtime of manufacturing apparatus. Provision of a micro-pore diffuser plate 206, such as the example shown in Figure 11, ensures that air flowing within enzyme print area 210 is even over the entire area of print screen 30, maintaining the relative humidity inside hood 202 and virtually eliminating the problem of moisture loss from the ink. Incorporating micro-pore plate 206 within the continuous web process for the manufacturing of electrochemical test sensors provides many benefits including a reduction in the amount of enzyme ink wasted, reduced downtime of equipment and consistency in the quality and definition of the print laid down.

## Claims

1. A method of improving print quality in a web manufacturing process wherein said web manufacturing process includes at least one print station (200) adapted to print enzyme ink on a moving substrate (4), said web manufacturing process comprising the steps of;
continuously moving said substrate through said web process;
depositing enzyme ink onto the substrate material through a screen printing process wherein ink is deposited on a top side of a screen (30) and forced through the screen onto the substrate located adjacent to the bottom side of said screen during the printing process;
enclosing the entire enzyme print area environment (210); and **characterized by**, passing air at a predefined temperature and humidity through a diffuser plate (206) prior to the air entering the enclosed enzyme print area, so that a laminar air flow is provided in contact with the enzyme print screen which maintains the moisture content of the enzyme ink.

2. A method according to Claim 1 wherein said air in said laminar flow has a temperature of between 16 and 20 degrees centigrade and a relative humidity of between 85 and 95%.

3. A method according to Claim 2 wherein said air in said laminar flow has a relative humidity of 91%.

4. A method according to Claim 1 wherein said diffuser plate comprises a micropore diffuser plate.

## Patentansprüche

1. Verfahren zur Verbesserung der Druckqualität eines Bahnherstellungsprozesses, wobei der Bahnherstellungsprozess mindestens eine Druckstation (200) zum Drucken von Enzymtinte auf ein sich bewegendes Substrat (4) enthält, wobei der Bahnherstellungsprozess die Schritte umfasst:
kontinuierliches Bewegen des Substrats den ganzen Bahnprozess über;
Aufbringen von Enzymtinte auf das Substratmaterial durch einen Siebdruckprozess, wobei Tinte auf eine Oberseite eines Siebes (30) aufgebracht und durch das Sieb auf das benachbart zur Unterseite des Siebes angeordnete Substrat während des Druckprozesses gezwungen wird;
Kapseln der gesamten Umgebung der Enzymdruckfläche (210); **gekennzeichnet durch** Leiten von Luft mit einer vorab festgelegten Temperatur und Feuchtigkeit **durch** eine Verteilerplatte (206), bevor die Luft die gekapselte Enzymdruckfläche betritt, so dass eine laminare Luftströmung in Kontakt mit dem Enzymdrucksieb bereitgestellt wird, die den Feuchtigkeitsgehalt der Enzymtinte aufrechterhält.

2. Verfahren nach Anspruch 1, **dadurch gekennzeichnet, dass** die Luft in der laminaren Strömung eine Temperatur von zwischen 16 und 20 Grad Celsius und eine relative Feuchtigkeit von zwischen 85 bis 95% aufweist.

3. Verfahren nach Anspruch 2, **dadurch gekennzeichnet, dass** die Luft in der laminaren Strömung eine relative Feuchtigkeit von 91 % aufweist.

4. Verfahren nach Anspruch 1, **dadurch gekennzeichnet, dass** die Verteilerplatte eine Mikroporenverteilerplatte aufweist.

## Revendications

1. Procédé d'amélioration de la qualité d'impression dans un processus de fabrication de voile dans lequel ledit processus de fabrication de voile inclut au moins un poste d'impression (200) adapté pour imprimer une encre à enzyme sur un substrat mobile (4), ledit processus de fabrication de voile comprenant les étapes consistant à :
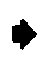 déplacer en continu ledit substrat dans ledit processus de voile ;
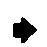 déposer une encre à enzyme sur le matériau de substrat par un processus de sérigraphie dans lequel de l'encre est déposée sur un côté supérieur d'un écran (30) et forcée à travers l'écran sur le substrat placé adjacent au côté inférieur dudit écran pendant le processus d'impression ;
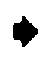 enfermer l'intégralité de l'environnement de zone d'impression à enzyme (210) ; et **caractérisé par** l'étape consistant à
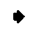 faire passer de l'air à une température et une humidité prédéfinies à travers une plaque diffuseuse (206) préalablement à l'entrée de l'air dans la zone d'impression d'enzyme enfermée, si bien qu'un écoulement d'air laminaire est fourni en contact avec l'écran d'impression à enzyme qui maintient la teneur en humidité de l'encre à enzyme.

2. Procédé selon la revendication 1, dans lequel ledit air dans ledit écoulement laminaire a une température comprise entre 16 et 20 degrés centigrades et une humidité relative comprise entre 85 et 95 %.

3. Procédé selon la revendication 2, dans lequel ledit air dans ledit écoulement laminaire a une humidité relative de 91 %.

4. Procédé selon la revendication 1, dans lequel ladite plaque diffuseuse comprend une plaque diffuseuse à micropores.
